# EUROPEAN PATENT SPECIFICATION

(11) **EP 2 105 248 B1**
(45) Date of publication and mention of the grant of the patent: **30.11.2011**
(21) Application number: 09155976.5
(22) Date of filing: 24.03.2009
(51) Int. Cl.: B23Q 1/70, B23Q 11/10

(54) **Drive spindle comprising a liquid drainage system**
Antriebsspindel umfassend ein Flüssigkeits-Abflusssystem
Broche motorisée comprenant un système de drainage de liquide

(30) Priority: 25.03.2008 IT BO20080187
(43) Date of publication of application: 30.09.2009
(73) Proprietor: HSD S.p.A., Pesaro (IT)
(72) Inventor: Selci, Giancarlo, 61100 Pesaro (IT)
(74) Representative: Jorio, Paolo

(56) References cited:
- EP-A- 1 203 631
- DE-A1- 10 135 419
- IT-A1- BO 980 033

## Description

The present invention relates to a drive spindle.

The present invention is particularly advantageously applicable to drive spindles for machining of glass and/or marble, to which the following description specifically refers without any loss of generality.

In the glass and/or marble machining sector, a prior art drive spindle of the type described in Italian patent No. 1299327 comprises an electric motor provided with a tubular output shaft, which is mounted so as to rotate about a given longitudinal axis thereof, and defines a tool-carrying spindle to which a tubular tool is attached; a first hydraulic circuit, which supplies a liquid flowing under pressure through the tool for the twofold purpose of cooling the tool and facilitating the removal of shavings, and comprises an inlet duct that is rotatingly engaged by said output shaft, an intermediate section defined by the output shaft, and an output section defined by the tool; and a second hydraulic circuit whereby at least the liquid passing between the inlet duct and the output shaft can be discharged in a controlled manner outside an outer casing of the drive spindle.

The second hydraulic circuit usually comprises a plurality of annular cavities, which are obtained between the inlet duct and the output shaft, are arranged in sequence along the longitudinal axis of the drive spindle, and communicate with a discharge chamber connected to a liquid collection system arranged outside said outer casing.

Since, in use, the first hydraulic circuit supplies the liquid continuously and the liquid may be prevented from flowing smoothly out of the tool due to the fact that the tool is used to machine the material, given the relatively small size of a hole through which the liquid flows from the tool, or due to the selective opening of said outlet hole, the known drive spindles of the type described above have some drawbacks mainly owing to the fact that the configuration of the second hydraulic circuit only enables the rate at which the liquid passes between the inlet duct and the output shaft to be controlled when the pressure of the liquid does not exceed a given maximum value.

If the pressure of the liquid exceeds the maximum value, the liquid would have difficulty flowing out of the tool which would increase the pressure of the liquid in the first hydraulic circuit, causing the liquid to be discharged in an uncontrolled manner along the second hydraulic circuit and, thus, causing a loss of pressure in the liquid leaving the tool.

It is an object of the present invention to provide a drive spindle that overcomes the drawbacks described above and that is simple and inexpensive to manufacture.

According to the present invention there is provided a drive spindle as set forth in the appended claims.

The present invention will now be described with reference to the accompanying drawings, illustrating a non-limiting embodiment thereof, in which:
figure 1 is a schematic perspective view of a preferred embodiment of the drive spindle according to the present invention; and
figures 2 and 3 are two side views, with parts shown in cross-section for the sake of clarity, of a detail of the drive spindle of figure 1 illustrated in two different operating positions.

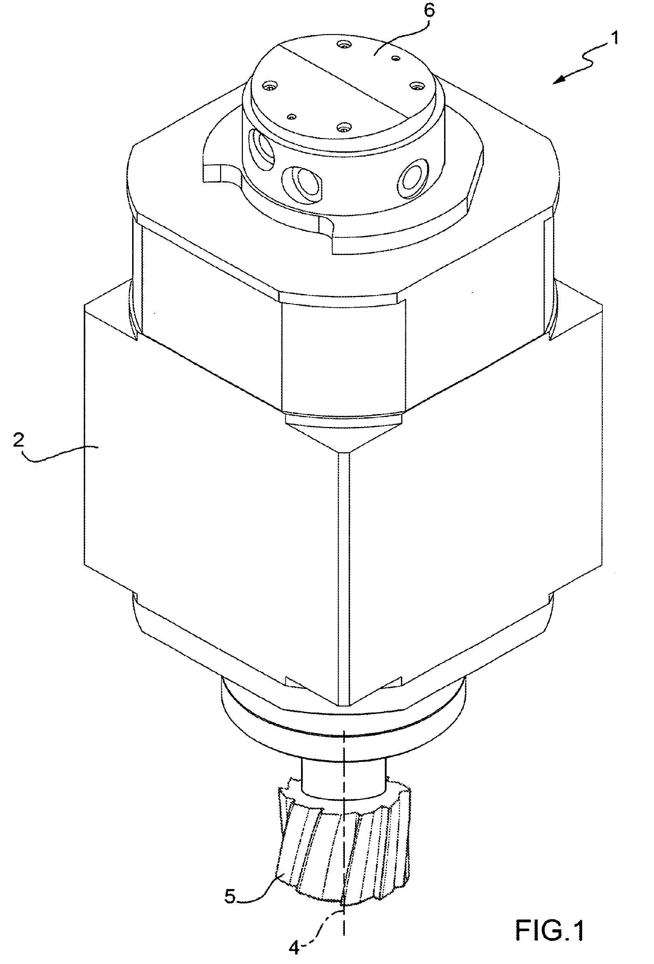

With reference to figures 1, 2 and 3, designated as a whole by number 1 is a drive spindle comprising a tubular outer casing 2 internally housing an electric motor of a known type which is not illustrated here, provided with a tubular output shaft 3, which is mounted so as to rotate, with respect to the casing 2, about a longitudinal axis 4 thereof, and has a free end section defining a tool-carrying spindle (not illustrated) to which there is attached a tubular tool 5 of a known kind communicating with the atmosphere via at least one outlet hole (not illustrated).

The casing 2 is closed in correspondence with an end thereof opposite the tool 5 by a cover 6, which is removably mounted on the casing 2, is limited axially by an internal face 7 that is substantially transversal to the axis 4 and arranged at a given distance from an end 8 of the shaft 3, and is provided with a tubular shank 9, which protrudes into the casing 2 coaxially with respect to the axis 4, extends inside the end 8, and is rotatingly engaged by said shaft 3.

The shank 9, the shaft 3 and the tool 5 define a first hydraulic circuit 10 connected to a device (not illustrated) for supplying a liquid under pressure, in the specific case water under pressure, suitable to cool the tool 5 and also to facilitate the removal of any shavings generated during machining.

The casing 2, the cover 6, the end 8, and the shank 9 delimit an annular chamber 11 coaxial to the axis 4 which internally houses a tubular seal member 12, which is substantially bell-shaped with its concavity facing towards the end 8, comprises a narrow annular portion 13 extending around the shank 9 transversely with respect to the axis 4 and a wide cylindrical portion 14 extending around the end 8 coaxially to the axis 4, and is attached in a fluid-tight manner to the end 8 by means of a seal ring 15 housed in a relative seat obtained in the portion 14.

The portion 13 has a central collar 16 having a substantially truncated cone shape which protrudes from the portion 13 towards the cover 6, while the portion 14 has two radial slots 17, which are obtained through the portion 14 parallel to the axis 4, are evenly distributed around the axis 4, and open outwardly in correspondence with a free end surface 18 of the portion 14.

The seal member 12 is slidingly attached to the end 8 and to the shank 9 and angularly fixed to the end 8 by means of two pins 19, which extend transversely to the axis 4, and are engaged in the slots 17 and in relative blind holes obtained in said end 8.

The drive spindle 1 also comprises a second hydraulic circuit 20 suitable to discharge the water passing under pressure between the end 8 and the shank 9 and between the casing 2 and the seal member 12 in a controlled manner outside the casing 2.

The circuit 20 comprises a first passage portion 21, which is defined between the end 8 and the shank 9 and between the shank 9 and the portion 13 of the seal member 12, and comprises, in turn, in the specific example, two annular cavities 22, which are obtained on the inside surface of the end 8 coaxially with respect to the axis 4, are arranged in sequence along the axis 4, face towards the shank 9, and are suitable to obstruct the flow of the water under pressure between the end 8 and the shank 9.

The circuit 20 also comprises a first annular discharge chamber 23, which is defined by the casing 2, the cover 6, the shank 9, and the seal member 12, and is connected to a known water collection system not illustrated here, which is mounted outside the casing 2; a second passage portion 24 defined between the casing 2 and the portion 14 of the seal member 12 and communicating with the chamber 23; and a second annular drainage chamber 25, which communicates with the chamber 23 via the portion 24, and is also connected to said collection system (not illustrated).

Lastly, the drive spindle 1 comprises an annular containment chamber 26, which is obtained between the casing 2 and a coupling 27 keyed to the end 8, communicates with the second chamber 25, and is connected to a known compressed air supply device which is not illustrated here, to define a pneumatic barrier suitable to prevent water leaking from said chamber 25.

In use, the water is supplied along the first hydraulic circuit 10 to the tool 5.

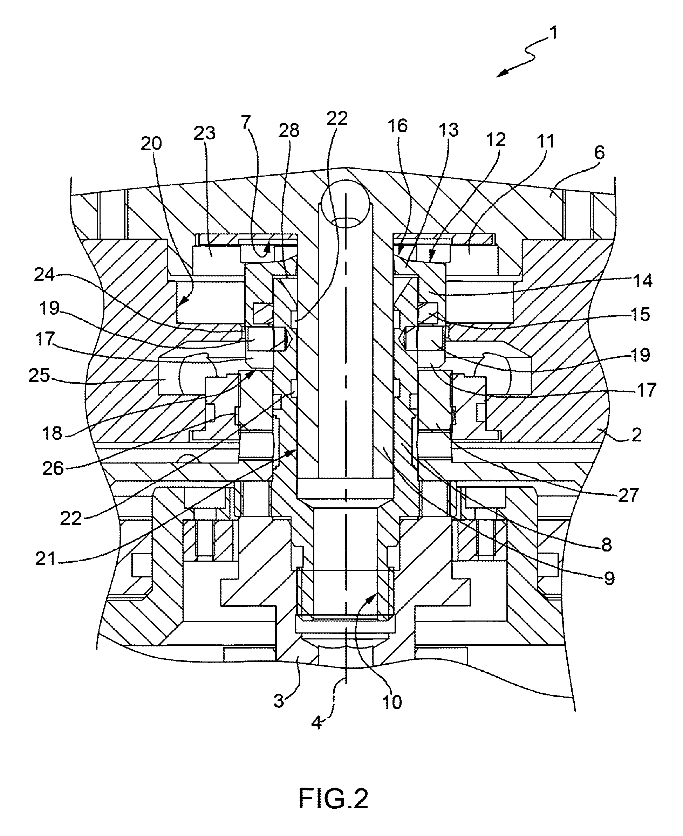

When the pressure of the water does not exceed a given maximum value, the seal member 12 is held in an open position of the second hydraulic circuit 20 (figure 2), in which the collar 16 is arranged at a given distance from the face 7 of the cover 6 so that the water that is not drained from the tool 5 can flow in a controlled manner along the first portion 21 and into the first chamber 23, and can also flow in a controlled manner if necessary along the second portion 24 and into the second chamber 25, and be discharged outside the casing 2.

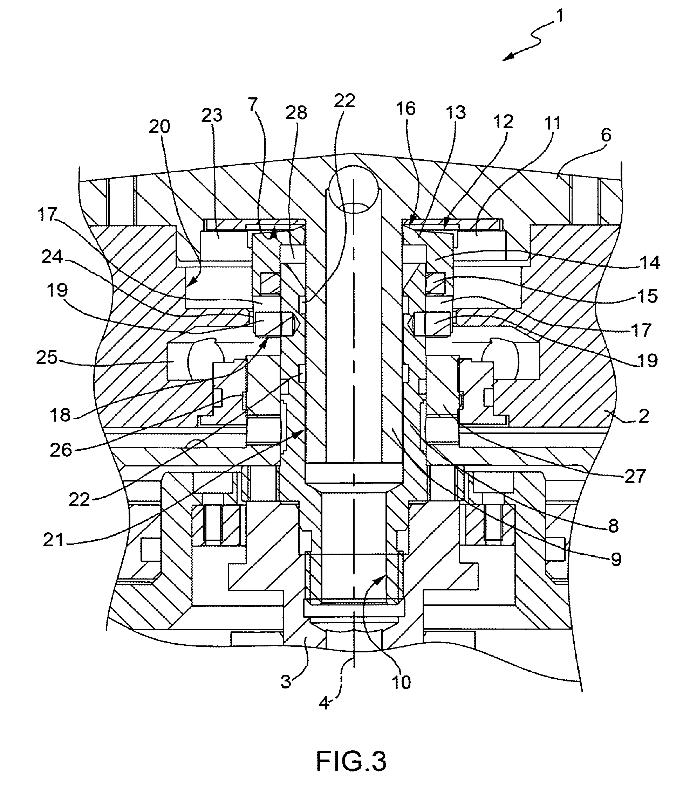

When the pressure of the water exceeds said maximum value, the water that is not drained from the tool 5 flows between the end 8 and the shank 9 so as to fill an annular variable volume chamber defined by the end 8, the shank 9, and the seal member 12 and move the seal member 12 into a closed position of the first portion 21 and, thus, of the second hydraulic circuit 20 (figure 3), in which the collar 16 is coupled with the face 7 of the cover 6 in a fluid-tight manner to prevent the water from flowing into the first chamber 23 and prevent a loss of pressure in the water flowing from the tool 5.

From the above description it thus follows that:
when the pressure of the water does not exceed said maximum value, the two annular cavities 22 guarantee a sufficient seal between the end 8 and the shank 9, they allow the water that is not discharged from the tool 5 to be discharged in a controlled manner outside the casing 2, and avoid the need to use seal rings that, when arranged between the end 8 and the shank 9, i.e. between an element that rotates and an element that is fixed with respect to the axis 4, would be subject to considerable wear and would need to be replaced frequently; and
the seal member 12 is only moved to its closed position and rubs against the face 7 of the cover 6 when the pressure of the water exceeds said maximum value.

The seal member 12 is thus subject to modest wear, has a relatively long service life, enables the drive spindle 1 to be used correctly both with relatively high water pressure levels and with relatively low water pressure levels, and is relatively easy to replace, simply by removing the cover 6.

## Claims

1. Drive spindle comprising an outer casing (2); an electric motor housed inside the casing (2) and provided with a tubular output shaft (3), which is mounted so as to rotate about a given longitudinal axis (4) thereof, and has a free end section defining a tool-carrying spindle; a tubular tool (5) attached to the tool-carrying spindle; a tubular inlet duct (9), which is coaxial with respect to said axis (4), extends inside an end (8) of the output shaft (3), and is rotatingly engaged by said output shaft (3); the tubular inlet duct (9), the tubular output shaft (3), and the tubular tool (5) defining a first hydraulic circuit (10) to supply a liquid under pressure to the tool (5); and a second hydraulic circuit (20) to discharge at least the liquid passing between the inlet duct (9) and the output shaft (3) outside the casing (2); and **characterized in that** it also comprises a tubular seal member (12), which extends around the inlet duct (9) and the output shaft (3), is attached in a fluid-tight manner to the output shaft (3), and is movable parallel to said axis (4) and that, when the pressure of the liquid exceeds a given maximum value, the liquid that is not drained from the tubular tool (5) can flow between the end (8) and the inlet duct (9) so as to fill an annular variable volume chamber (28) defined by the end (8), the inlet duct (9), and the tubular seal member (12) and suitable to increase its volume in order to move the tubular seal member (12) from an open position to a closed position of said second hydraulic circuit (20).

2. Drive spindle according to claim 1, wherein the second hydraulic circuit (20) comprises a first passage portion (21) defined between the inlet duct (9) and the output shaft (3) and between the inlet duct (9) and the seal member (12), and a first discharge chamber (23), which is slidingly engaged by the seal member (12), communicates with the first passage portion (21) when the seal member (12) is arranged in its open position, and is limited axially by a base wall (7) suitable to couple with the seal member (12) in a fluid-tight manner when said seal member (12) moves to its closed position.

3. Drive spindle according to claim 2, wherein the first discharge chamber (23) communicates with a liquid discharge system arranged outside the casing (2).

4. Drive spindle according to any one of the previous claims, wherein the seal member (12) is substantially bell-shaped, comprises a narrow portion (13) and a wide portion (14) which are slidingly coupled to the inlet duct (9) and, respectively, to the output shaft (3), and coupled in an angularly fixed manner to said output shaft (3).

5. Drive spindle according to any one of the previous claims, wherein the seal member (12) is provided with a seal ring (15) that is attached in a fluid-tight manner to the output shaft (3).

6. Drive spindle according to any one of the claims from 2 to 5, wherein the second hydraulic circuit (20) comprises a second passage portion (24) defined between the casing (2) and the seal member (12) and communicating with the first drainage chamber (23), and a second drainage chamber (25) communicating with the second passage portion (24).

7. Drive spindle according to claim 6, wherein the second discharge chamber (25) communicates with a liquid discharge system arranged outside the casing (2).

8. Drive spindle according to claim 7 and also comprising a containment chamber (26), which is defined between the output shaft (3) and the casing (2), communicates with the second discharge chamber (25), and is connected to a pneumatic device for supplying a gas under pressure to prevent the liquid leaking from said second drainage chamber (25).

9. Drive spindle according to any one of the previous claims and also comprising a cover (6) to close the casing (2) provided with said input duct (9) and removably mounted on said casing (2) to enable the seal member (12) to be replaced.

## Patentansprüche

1. Antriebsspindel aufweisend ein äußeres Gehäuse (2); einen in dem Gehäuse (2) angeordneten Elektromotor mit einem rohrförmigen Ausgangsschaft (3), welcher zum Rotieren um seine vorbestimmte longitudinale Achse (4) montiert ist und welcher einen freien Endabschnitt aufweist, der eine werkzeugtragende Spindel definiert; ein rohrförmiges Werkzeug (5), welches an der werkzeugtragenden Spindel befestigt ist; einen rohrförmigen Einlasskanal (9), welcher koaxial zu der Achse (4) angeordnet ist, welcher sich in ein Ende (8) des Ausgangsschaftes (3) hinein erstreckt und mit dem Ausgangsschaft (3) in drehbarer Wirkverbindung ist; wobei der rohrförmige Einlasskanal (9), der rohrförmige Ausgangsschaft (3) und das rohrförmige Werkzeug (5) einen ersten hydraulischen Kreislauf (10) definieren, um eine Flüssigkeit unter Druck zu dem Werkzeug (5) zu fördern; und einen zweiten hydraulischen Kreislauf (20), um zumindest die Flüssigkeit abzuleiten, welche zwischen dem Einlasskanal (9) und dem Ausgangsschaft (3) außerhalb des Gehäuses (2) vorbeifließt; und **gekennzeichnet dadurch, dass** diese ferner ein rohrförmiges Dichtungselement (12) aufweist, welches sich um den Einlasskanal (9) und den Ausgangsschaft (3) herum erstreckt, fluiddicht an dem Ausgangsschaft (3) befestigt ist und parallel zu der Achse (4) beweglich ist und dass, wenn der Druck der Flüssigkeit einen vorbestimmten maximalen Wert erreicht, die Flüssigkeit, die nicht durch das rohrförmige Werkstück (5) abgeleitet wird, zwischen dem Ende (8) und dem Einlasskanal (9) fließen kann, um eine variable ringförmige Volumenkammer (28) zu füllen, welche von dem Ende (8), dem Einlasskanal (9) und dem rohrförmigen Dichtelement (12) definiert ist und welche dazu geeignet ist, ihr Volumen zu vergrößern, um das rohrförmige Dichtelement (12) von einer offenen Position in eine geschlossene Position des zweiten hydraulischen Kreislaufes (20) zu bewegen.

2. Antriebsspindel nach Anspruch 1, wobei der zweite hydraulische Kreislauf (20) einen ersten Durchgangsabschnitt (21) aufweist, welcher zwischen dem Einlasskanal (9) und dem Ausgangsschaft (3) und zwischen dem Einlasskanal (9) und dem Dichtungselement (12) definiert ist, und eine zweite Ableitungskammer (23), welche gleitend wirkverbunden mit dem Dichtungselementes (12) wirkverbunden ist, welche mit dem ersten Durchgangsabschnitt (21) verbunden ist, wenn das Dichtungselement (12) in seiner offenen Position angeordnet ist, und welches axial begrenzt wird durch einen Wandabschnitt (7), welcher dazu geeignet ist mit dem Dichtungselement (12) in flüssigkeitsdicht zusammenzuwirken, wenn das Dichtelement (12) sich in seine geschlossene Position bewegt.

3. Antriebsspindel nach Anspruch 2, wobei die erste Ableitungskammer (23) mit einem außerhalb des Gehäuses (2) angeordneten Flüssigkeitsentleerungssystem wirkverbunden ist.

4. Antriebsspindel nach einem der vorherigen Ansprüche, wobei das Dichtelement (12) im Wesentlichen glockenförmig ausgebildet ist und einen engen Abschnitt (13) sowie einen weiten Abschnitt (14) aufweist, welche gleitend mit dem Einlasskanal (9) bzw. mit dem Ausgangsschaft (3) gekoppelt sind und winkelfest mit dem Ausgangsschaft (3) gekoppelt sind.

5. Antriebsspindel nach einem der vorhergehenden Ansprüche, wobei das Dichtelement (12) einen Dichtring (15) aufweist, welcher in einer flüssigkeitsdicht mit dem Ausgangsschaft (3) verbunden ist.

6. Antriebsspindel nach einem der Ansprüche 2 bis 5, wobei der zweite hydraulische Kreislauf (20) einen zweiten Durchgangsabschnitt (24), welcher zwischen dem Gehäuse (2) und dem Dichtelement (12) definiert ist und welcher mit der ersten Entleerungskammer (23) in Wirkverbindung ist und eine zweite Ableitungskammer (25) aufweist, welche mit dem zweiten Durchgangsabschnitt (24) in Wirkverbindung ist.

7. Antriebsspindel nach Anspruch 6, wobei die zweite Ableitungskammer (25) mit einem außerhalb des Gehäuses (2) angeordneten Flüssigkeitsentleerungssystem wirkverbunden ist.

8. Antriebsspindel nach Anspruch 7, welche ferner eine Speicherkammer (26) aufweist, welche zwischen dem Ausgangsschaft (3) und dem Gehäuse (2) definiert ist und welche mit der zweiten Ableitungskammer (25) in Wirkverbindung ist und welche mit einer Pneumatikeinrichtung zum Zuführen eines Gases unter Druck ausgebildet ist, um ein Herauslaufen der Flüssigkeit aus der zweiten Ableitungskammer (25) zu verhindern.

9. Antriebsspindel nach einem der vorhergehenden Ansprüche, welche ferner einen Deckel (6) aufweist, um das Gehäuse (2), welches mit dem Einlasskanal (9) versehen ist, zu verschließen, wobei der Deckel (6) abnehmbar von dem Gehäuse (2) montiert ist, um ein Auswechseln des Dichtelementes (12) zu ermöglichen.

## Revendications

1. Broche motorisée comprenant un boîtier extérieur (2) ; un moteur électrique, logé à l'intérieur du boîtier (2) et muni d'un arbre de sortie (3) tubulaire, monté de manière à tourner autour d'un axe longitudinal (4) donné de celui-ci, et présentant une section d'extrémité libre, définissant une broche porte-outil ; un outil (5) tubulaire, attaché à la broche porte-outil ; un conduit d'entrée (9) tubulaire, coaxial audit axe (4), s'étendant à l'intérieur d'une extrémité (8) de l'arbre de sortie (3), et mis en prise en rotation par ledit arbre de sortie (3) ; le conduit d'entrée (9) tubulaire, l'arbre de sortie (3) tubulaire et l'outil (5) tubulaire définissant un premier circuit hydraulique (10) pour fournir un liquide sous pression à l'outil (5) ; et un deuxième circuit hydraulique (20), pour décharger au moins le liquide passant, entre le conduit d'entrée (9) et l'arbre de sortie (3), à l'extérieur du boîtier (2) ; et **caractérisé en ce qu'**il comprend également un organe d'étanchéité (12) tubulaire, s'étendant autour du conduit d'entrée (9) et de l'arbre de sortie (3), attaché, d'une manière étanche aux liquides, à l'arbre de sortie (3) et déplaçable parallèlement audit axe (4) et **en ce que**, lorsque la pression du liquide est supérieure à une valeur maximale donnée, le liquide qui n'est par drainé de l'outil (5) tubulaire peut s'écouler entre l'extrémité (8) et le conduit d'entrée (9) de manière à remplir une chambre (28) annulaire à volume variable, définie par l'extrémité (8), le conduit d'entrée (9) et l'organe d'étanchéité (12) tubulaire et convenant pour augmenter son volume, de manière à déplacer l'organe d'étanchéité (12) tubulaire, d'une position ouverte à une position fermée dudit deuxième circuit hydraulique (20).

2. Broche motorisée selon la revendication 1, dans laquelle le deuxième circuit hydraulique (20) comprend une première partie formant passage (21), définie entre le conduit d'entrée (9) et l'arbre de sortie (3) et entre le conduit d'entrée (9) et l'organe d'étanchéité (12), et une première chambre de décharge (23), placée en contact coulissant avec l'organe d'étanchéité (12), communique avec la première partie formant passage (21) lorsque l'organe d'étanchéité (12) est placé à la position ouverte, et est limité axialement par une paroi de base (7) convenant pour s'accoupler à l'organe d'étanchéité (12), d'une manière étanche aux liquides, lorsque l'organe d'étanchéité (12) se déplace à sa position fermée.

3. Broche motorisée selon la revendication 2, dans laquelle la première chambre de décharge (23) communique avec un système de décharge de liquide, agencé à l'extérieur du boîtier (2).

4. Broche motorisée selon l'une quelconque des revendications précédentes, dans laquelle l'organe d'étanchéité (12) est sensiblement en forme de cloche, comprend une partie étroite (13) et une partie large (14), couplées à coulissement au conduit d'entrée (9) et, respectivement, à l'arbre de sortie (3), et couplées, d'une manière angulairement fixe, audit arbre de sortie (3).

5. Broche motorisée selon l'une quelconque des revendications précédentes, dans laquelle l'organe d'étanchéité (12) est muni d'un anneau d'étanchéité (15), attaché, d'une manière étanche aux fluides, à l'arbre de sortie (3).

6. Broche motorisée selon l'une quelconque des revendications 2 à 5, dans laquelle le deuxième circuit hydraulique (20) comprend une deuxième partie formant passage (24), définie entre le boîtier (2) et l'organe d'étanchéité (12) et communicant avec le premier organe de drainage (23), et une deuxième chambre de drainage (25), communicant avec la deuxième partie formant passage (24).

7. Broche motorisée selon la revendication 6, dans laquelle la deuxième chambre de drainage (25) communique avec un système de décharge de liquide, agencé à l'extérieur du boîtier (2).

8. Broche motorisée selon la revendication 7 et comprenant également une chambre de confinement (26), définie entre l'arbre de sortie (3) et le boîtier (2), communicant avec la deuxième chambre de drainage (25), et connectée à un dispositif pneumatique pour fournir un gaz sous pression de manière à empêcher le liquide de fuir de ladite deuxième chambre de drainage (25).

9. Broche motorisée selon l'une quelconque des revendications précédentes et comprenant également un couvercle (6), pour fermer le boîtier (2), muni dudit conduit d'entrée (9) et monté de manière amovible sur ledit boîtier (2), de manière à permettre à l'organe d'étanchéité (12) d'être remplacé.
